# EUROPEAN PATENT APPLICATION

(11) **EP 4 609 974 A1**
(43) Date of publication of application: **03.09.2025**
(21) Application number: 25160736.2
(22) Date of filing: 27.02.2025
(51) Int. Cl.: B23B 47/28, B23B 49/02

(54) **CUTTING TOOL SUPPORT FOR IN-SITU HOLE MANUFACTURING**

(30) Priority: 29.02.2024 US 202418591945
(71) Applicant: RTX Corporation, Farmington, CT 06032 (US)
(72) Inventor: McCAFFREY, Michael G., Farmington, 06032 (US); KING, Christopher R., Farmington, 06032 (US); COLEMAN, Scott, Farmington, 06032 (US); SCHMARTZ, John M., Farmington, 06032 (US); COTE, Conrad W., Farmington, 06032 (US); CARROLL, Edward J., Farmington, 06032 (US); TRACY, James E., Farmington, 06032 (US); MATTHEWS, John B., Farmington, 06032 (US)
(74) Representative: Dehns

(57) **Abstract**

A tooling support system (201) includes tooling support elements (210, 220, 230). Each tooling support element (210, 220, 230) includes an anchor (240) mountable to an external component of a body being drilled into, a tool guide (260) supportable by the anchor (240) and defining a tooling pathway (261) and a guide sleeve (270) disposed at an end of the tooling pathway (261). Each of the guide sleeves (270) of the tooling support elements (210, 220, 230) has varying dimensions.

## Description

### TECHNICAL FIELD

Exemplary embodiments of the present disclosure relate generally to cutting tools and, in some embodiments, a cutting tool support for in-situ hole manufacturing.

### BACKGROUND

A gas turbine engine generates power from combustion of fuel and air. Air is drawn into the gas turbine engine through an inlet and is compressed in a compressor. Compressed air is then mixed with fuel and combusted in a combustor to produce high-temperature and high-pressure working fluid. The working fluid is directed to a turbine where the working fluid is expanded and aerodynamically interacts with turbine vanes and blades. The expanded working fluid can be exhausted to generate thrust in an engine. The aerodynamic interaction of the working fluid with the turbine blades and vanes causes turbine disks, to which the blades are attached, to rotate. This in turn causes a rotor to rotate. The rotation of the rotor can be used to operate the compressor, to rotate a fan at the inlet and to generate electricity.

Routine inspection of gas turbine engines is often important to confirm that all of its component parts are in good condition and working properly. Therefore, a continuing need exists for improvements inspection tools and processes.

### BRIEF DESCRIPTION

According to an aspect of the present invention, a tooling support system is provided. The tooling support system includes tooling support elements. Each tooling support elements includes an anchor mountable to an external component of a body being drilled into, a tool guide supportable by the anchor and defining a tooling pathway and a guide sleeve disposed at an end of the tooling pathway. Each of the guide sleeves of the tooling support elements have varying dimensions (each guide sleeve of a respective tooling support element has a different equivalent dimension, e.g. length, when compared with the guide sleeves of the other tooling support elements such that each guide sleeve has a different dimension/length).

In an embodiment of the above, the body being drilled into is a gas turbine engine and the external component is a casing of the gas turbine engine and the tool guide of each of the tooling support elements has an exterior shape that conforms to an interior shape of a cooling tube of the gas turbine engine.

In an embodiment according to any of the previous embodiments, the tool guide and the guide sleeve of each of the tooling support elements are integral with one another.

In an embodiment according to any of the previous embodiments, the tooling pathway of each of the tooling support elements is curved.

In an embodiment according to any of the previous embodiments, the tool guide of each of the tooling support elements is formed to define at least one of a vacuum port along a length of the tooling pathway and a coolant pathway along a length of the tooling pathway.

In an embodiment according to any of the previous embodiments, each of the tooling support elements includes a bearing to support drilling tool rotation.

In an embodiment according to any of the previous embodiments, each of the guide sleeves of each of the tooling support elements has a unique length.

According to an aspect of the present invention, a tooling support system is provided and includes tooling support elements and one or more drilling tools. Each of the tooling support elements includes an anchor mountable to an external component of a body being drilled into, a tool guide supportable by the anchor and defining a tooling pathway and a guide sleeve disposed at an end of the tooling pathway. Each of the guide sleeves of the tooling support elements have varying dimensions. Each of the one or more drilling tools is passable through the tooling pathway and the guide sleeve of at least a corresponding one of the tooling support elements to drill into an internal component of the body.

In an embodiment of the above, the body being drilled into is a gas turbine engine, the external component is a casing of the gas turbine engine and the internal component is an internal component of the gas turbine engine and the tool guide of each of the tooling support elements has an exterior shape that conforms to an interior shape of a cooling tube of the gas turbine engine.

In an embodiment according to any of the previous embodiments, the internal component is angled relative to the tooling pathway and the tool guide of each of the tooling support elements resists side-loading of the one or more drilling tools drilling into the internal component.

In an embodiment according to any of the previous embodiments, the tool guide and the guide sleeve of each of the tooling support elements are integral with one another.

In an embodiment according to any of the previous embodiments, the tooling pathway of each of the tooling support elements is curved and each of the one or more drilling tools includes a drill head connected to a flexible drive section.

In an embodiment according to any of the previous embodiments, the tool guide of each of the tooling support elements is formed to define at least one of a vacuum port along a length of the tooling pathway and a coolant pathway along a length of the tooling pathway.

In an embodiment according to any of the previous embodiments, each of the tooling support elements includes a bearing to support drilling tool rotation.

In an embodiment according to any of the previous embodiments, each of the guide sleeves of each of the tooling support elements has a unique length.

According to an aspect of the present invention, a method of drilling into a gas turbine engine is provided. The method includes manufacturing tooling support elements, installing a first tooling support element with a shortest guide sleeve into a cooling hole of the gas turbine engine, passing a drilling tool through a tooling pathway of the first tooling support element, operating the drilling tool to drill a pilot hole into an internal component of the gas turbine engine, installing a second tooling support element with a next shortest guide sleeve into the cooling hole of the gas turbine engine such that the next shortest guide sleeve enters the pilot hole, passing the drilling tool through a tooling pathway of the second tooling support element, operating the drilling tool to drill into the internal component at the pilot hole and repeating the installing, the passing and the operating to drill through the internal component.

In an embodiment of the above, the method further includes anchoring one or more of the tooling support elements to a casing of the gas turbine engine.

In an embodiment according to any of the previous embodiments, the internal component is angled relative to the tooling pathway.

In an embodiment according to any of the previous embodiments, the operating of the drilling tool includes vacuuming drilled material.

In an embodiment according to any of the previous embodiments, the operating of the drilling tool includes cooling the drilling tool.

These and other advantages and features will become more apparent from the following description taken in conjunction with the drawings.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a perspective view of a tooling support system in accordance with embodiments;
FIG. 3 is a perspective view of an anchor of a tooling support system in accordance with embodiments;
FIGS. 4A and 4B are perspective views of tooling support elements of a tooling support system in accordance with embodiments;
FIG. 5 is a perspective view of a drilling tool of a tooling support system in accordance with embodiments; and
FIG. 6 is a flow diagram illustrating a method of drilling into a gas turbine engine in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

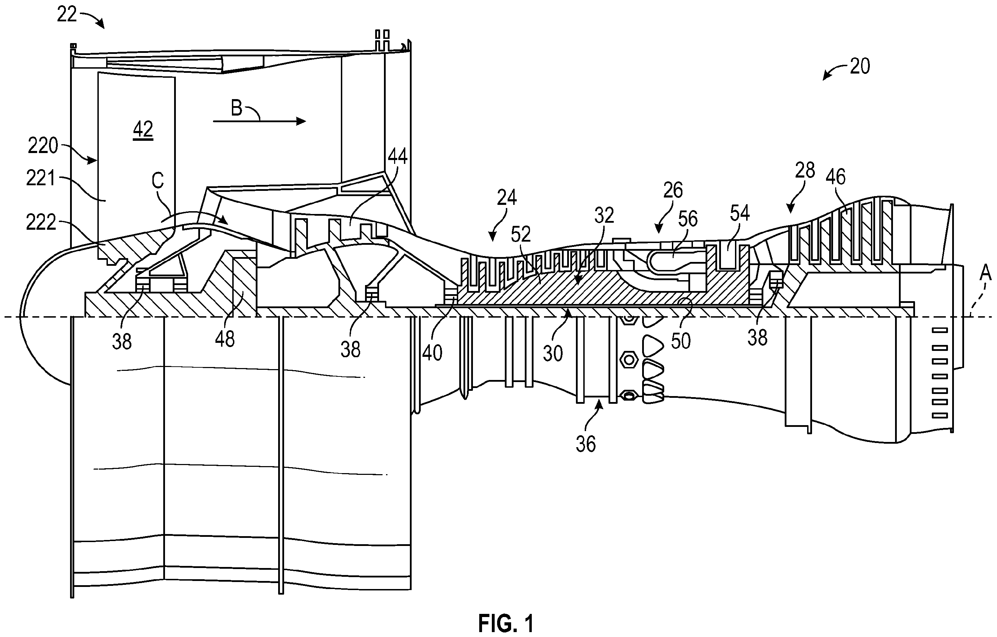

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in the gas turbine engine 20 between the high pressure compressor 52 and the high pressure turbine 54. The engine static structure 36 is arranged generally between the high pressure turbine 54 and the low pressure turbine 46. The engine static structure 36 further supports the bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 and then the high pressure compressor 52, is mixed and burned with fuel in the combustor 56 and is then expanded over the high pressure turbine 54 and the low pressure turbine 46. The high and low pressure turbines 54 and 46 rotationally drive the low speed spool 30 and the high speed spool 32, respectively, in response to the expansion. It will be appreciated that each of the positions of the fan section 22, compressor section 24, combustor section 26, turbine section 28, and fan drive gear system 48 may be varied. For example, geared architecture 48 may be located aft of the combustor section 26 or even aft of the turbine section 28, and the fan section 22 may be positioned forward or aft of the location of geared architecture 48.

Currently, inspections for second stage disks in a high-pressure turbine, such as the high-pressure turbine 54 of FIG. 1, require access to first-second high-pressure turbine rotor cavities. The tooling support that is required for these types of inspections often need to provide for usages of different sized tooling to prevent tooling location errors and to allow for quick changeovers.

In certain cases, gas turbine engine product have been experiencing relatively high engine removals due to potential powder metal defects in high-pressure compressor/high-pressure turbine (HPC/HPT) disks. In these or other cases, methods to access the appropriate cavities for inspection require drilling through vane and inner air seal components and repeatable tooling for drilling and inspection is needed to avoid drilling into cover plate knife edges. Often, vane components are made of a super alloy, which provides significant challenges in terms of drilling without tool movement.

Accordingly, a need exists for tooling and tooling support that allows for precise tooling location and quick changeovers when drilling into appropriate cavities through components that are difficult to drill through.

Therefore, as will be described below, a guide tube is provided to support a cutting tool while minimizing damage to the inside of a cooled airfoil. A hole can be installed in the field and then a probe can be inserted to allow for inspection of the 1st and 2nd disk for buried flaws inside the bore of the disk. Engine removal and disassembly can be prevented if the inspection results indicate the disks are capable of another interval before re-inspection. In addition, a jig is provided for repeatable drilling and inspection methods to access a rotor cavity. The jig has quick changeover tooling with various bushing sizes that can be used with drill tooling and inspection guide tubes as well as an alignment set screw for locating features. Guide tubes can be held to the bushings using various methods including set screws, epoxy and fasteners.

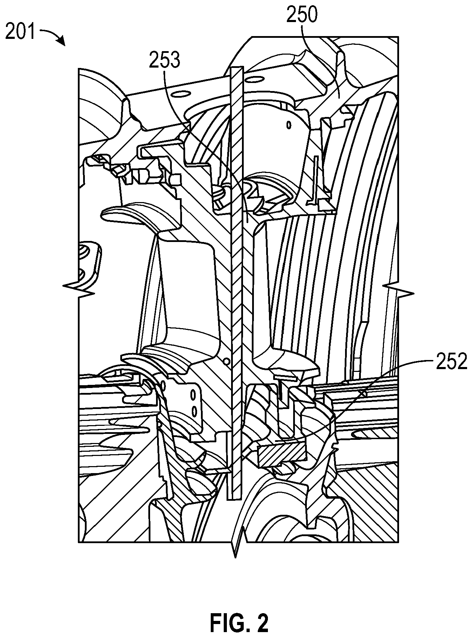

With reference to FIGS. 2-5, a tooling support system 201 is provided for drilling into a component of a gas turbine engine, such as the gas turbine engine 20 of FIG. 1. The tooling support system 201 includes tooling support elements 210, 220 and 230. Each of the tooling support elements 210, 220, 230 includes an anchor 240 that is mountable to an external component of a body being drilled into (i.e., a casing 250 of a gas turbine engine), a tool guide 260 that is supportable by the anchor 240 and that is formed to define a tooling pathway 261 and a guide sleeve 270 that is disposed at an end of the tooling pathway 261.

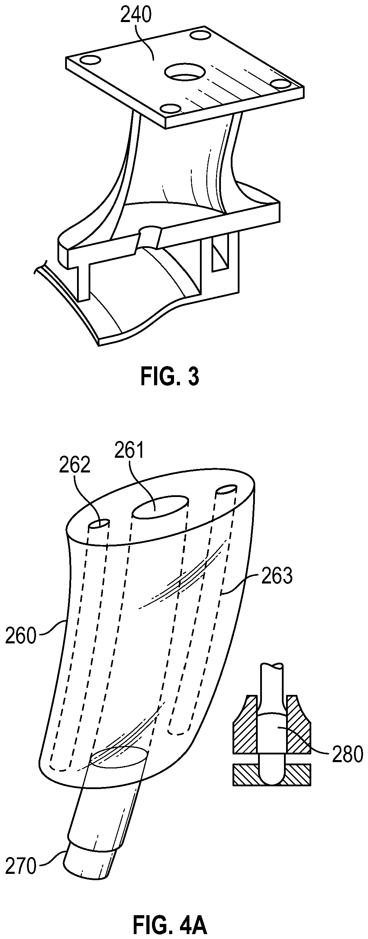

As shown in FIG. 4A, each of the tooling support elements 210, 220, 230 can further include a bearing 280, such as a needle bearing or a journal bearing, to support for example rotation of a drilling tool (to be described further below).

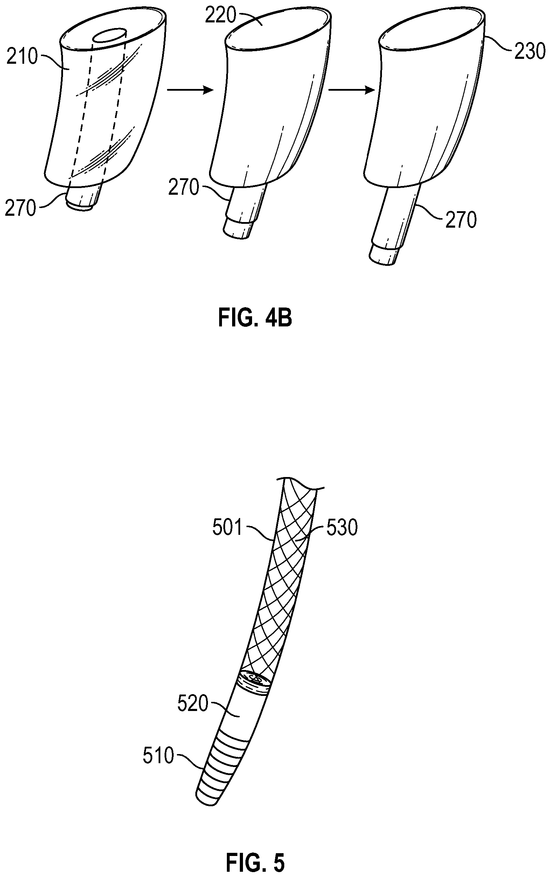

As shown in FIG. 4B, each of the guide sleeves 270 of the tooling support elements 210, 220, 230 has varying dimensions. In accordance with embodiments, each of the guide sleeves 270 of the tooling support elements 210, 220, 230 has a different or unique length. As shown in FIG. 5, the tooling support system 201 further includes one or more drilling tools 501. Each of the one or more drilling tools 501 is passable through the tooling pathway 261 and the guide sleeve 270 of at least a corresponding one of the tooling support elements 210, 220, 230 to drill into an internal component of the body (i.e., a vane element 251 and/or an inner air seal (IAS) 252 of the gas turbine engine).

At least the tool guide 260 and the guide sleeve 270 of each of the tooling support elements 210, 220, 230 can be additively manufactured integrally with one another, with the tool guide 260 formed to have an exterior shape that conforms to an interior shape of, for example, a cooling tube 253 of the gas turbine engine.

In accordance with embodiments as shown in FIG. 4A and FIG. 5, the tooling pathway 261 of each of the tooling support elements 210, 220, 230 can be straight or curved and each of the one or more drilling tools 501 can include a drill head 510 that is connected to a stabilizing shaft 520 that is in turn connected to a flexible drive section 530. The flexible drive section 530 can extend through the straight or curved tooling pathway 261 of each of the tooling support elements 210, 220, 230 and transmit drive torque to the drill head 510 via the stabilizing shaft 520. In addition, the tool guide 260 of each of the tooling support elements 210, 220, 230 can be formed to define at least one or both of a vacuum port 262 along a length of the tooling pathway 261 and by which material that is removed by the drill head 510 can be drawn away from the internal component and a coolant pathway 263 along a length of the tooling pathway 261 and by which the drill head 510 and the internal component can be cooled during drilling.

In an exemplary case, the tooling support system 201 can be used to drill through a 2^{nd} vane as shown in FIG. 2. In this case, the anchor 240 is anchored to or around a TCA port where a 5 mm wide drilling hole to the 2^{nd} vane can be straight through an ID core passage and an IAS to obtain access to a 2^{nd} disk and a 1^{st} disk handshake. The tooling support system 201 provides for allowances to an extent that TCA pipe locations are not uniform to vane passages, avoids damage to internal baffles and avoids 2^{nd} vane wall break out.

In certain cases, the internal component of the body (i.e., the IAS 252) may be angled relative to the tooling pathway 261. In these or other cases, the tool guide 260 of each of the tooling support elements 210, 220, 230 resists side-loading of the one or more drilling tools 501 when the one or more drilling tools 501 is used to drill into the internal component. This aids in locating the one or more drilling tools 501 and in maintaining the location during drilling.

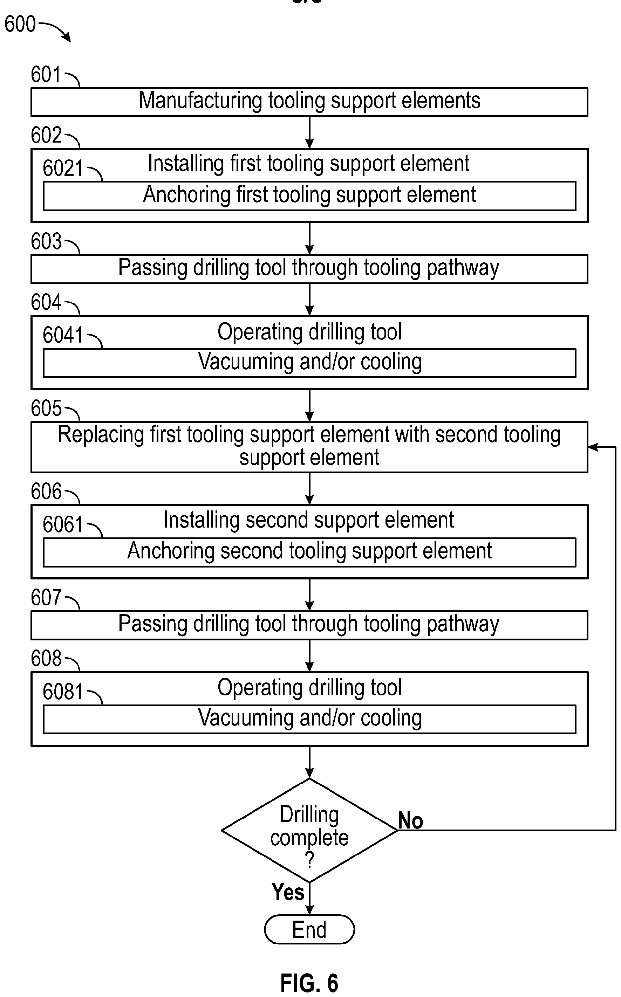

With reference to FIG. 6, a method 600 of drilling into a gas turbine engine as described above is provided. The method 600 includes additively manufacturing tooling support elements, such as the tooling support elements 210, 220, 230 (block 601), installing a first tooling support element with a shortest guide sleeve into a cooling hole of the gas turbine engine (block 602) and optionally anchoring the first tooling support to a casing of the gas turbine engine (block 6021), passing a drilling tool through a tooling pathway of the first tooling support element (block 603) and operating the drilling tool to drill a pilot hole into an internal component, such as a vane element and/or an IAS that can be angled relative to the tooling pathway, of the gas turbine engine (block 604) while optionally executing at least one of a vacuuming of drilled material and a cooling of the drilling tool (block 6041). Subsequently, the method 600 includes replacing the first tooling support element with a second tooling support element with a next shortest guide sleeve by removing the first tooling support element from the cooling hole (block 605) and installing the second tooling support element with the next shortest guide sleeve into the cooling hole such that the next shortest guide sleeve enters the pilot hole (block 606) and optionally anchoring the second tooling support to the casing (block 6061). The guide sleeve of the second tooling support element fits in the pilot hole and can thereby locate the drilling tool in a given precise drilling location. Thus, the method 600 also includes passing the drilling tool through a tooling pathway of the second tooling support element (block 607) and operating the drilling tool to drill into the internal component at the pilot hole (block 608) while optionally executing at least one of a vacuuming of drilled material and a cooling of the drilling tool (block 6081). The method 600 includes repetitions of the removing of block 605, the installing of block 606, the passing of block 607 and the operating of block 608 to complete the drilling operation through the internal component. In each instance of replacing the tooling support element with a tooling support element having a longer guide sleeve, the new guide sleeve fits into the steadily enlarging and/or deepening pilot hole. This fitting of the guide sleeve continues to provide for precise location of the guide sleeve and the drilling tool.

In accordance with further embodiments, the tooling support system 201 of FIGS. 2-5 can further include a support structure, such as a jig, that is supportive of each of the tooling support elements 210, 220 and 230 and each of the one or more drilling tools 501. During an operation of the tooling support system 201 of FIGS. 2-5, the support structure can be disposed proximate to the body being drilled into whereby each of the tooling support elements 210, 220 and 230 and each of the one or more drilling tools 501 can be engaged for operation manually and/or automatically.

Technical effects and benefits of the features described herein are the provision of tooling and tooling support whereby engine time on wing is not limited by powder metal defects of compressor and turbine rotors. A modified jig with quick changeover tooling capability allows for access to the HPT 1-2 rotor cavity for alternate inspection methods that help mitigate MRO turnover times and AOG reductions.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A tooling support system (201), comprising tooling support elements (210, 220, 230), each tooling support element (210, 220, 230) comprising:
an anchor (240) mountable to an external component of a body being drilled into;
a tool guide (260) supportable by the anchor (240) and defining a tooling pathway (261); and
a guide sleeve (270) disposed at an end of the tooling pathway (261), each of the guide sleeves (270) of the tooling support elements (210, 220, 230) having varying dimensions.

2. The tooling support system (201) according to claim **1,** wherein:
the body being drilled into is a gas turbine engine (20) and the external component is a casing (250) of the gas turbine engine (20), and
the tool guide (260) of each of the tooling support elements (210, 220, 230) has an exterior shape that conforms to an interior shape of a cooling tube (253) of the gas turbine engine (20).

3. The tooling support system (201) according to claim 1 or 2, wherein the tool guide (260) and the guide sleeve (270) of each of the tooling support elements (210, 220, 230) are integral with one another.

4. The tooling support system (201) according to any preceding claim, wherein the tooling pathway (261) of each of the tooling support elements (210, 220, 230) is curved.

5. The tooling support system (201) according to any preceding claim, wherein the tool guide (260) of each of the tooling support elements (210, 220, 230) is formed to define at least one of a vacuum port (262) along a length of the tooling pathway (261) and a coolant pathway (263) along a length of the tooling pathway (261).

6. The tooling support system (201) according to any preceding claim, wherein each of the tooling support elements (210, 220, 230) comprises a bearing (280) to support drilling tool rotation.

7. The tooling support system (201) according to any preceding claim, wherein each of the guide sleeves (270) of each of the tooling support elements (210, 220, 230) has a unique length.

8. The tooling support system (201) according to any preceding claim, further comprising one or more drilling tools (501), each of which is passable through the tooling pathway (261) and the guide sleeve (270) of at least a corresponding one of the tooling support elements (210, 220, 230) to drill into an internal component of the body.

9. The tooling support system (201) according to claim 8, wherein:
the body being drilled into is a gas turbine engine (20), the external component is a casing (250) of the gas turbine engine (20) and the internal component is an internal component of the gas turbine engine (20), and
the tool guide (260) of each of the tooling support elements (210, 220, 230) has an or the exterior shape that conforms to an or the interior shape of a or the cooling tube (253) of the gas turbine engine (20).

10. The tooling support system (201) according to claim 8 or 9, wherein:
the internal component is angled relative to the tooling pathway (261) and the tool guide (260) of each of the tooling support elements (210, 220, 230) resists side-loading of the one or more drilling tools (501) drilling into the internal component; and/or
the tooling pathway (261) of each of the tooling support elements (210, 220, 230) is curved and each of the one or more drilling tools (501) comprises a drill head (510) connected to a flexible drive section (530).

11. A method of drilling into a gas turbine engine (20), the method comprising:
manufacturing tooling support elements (210, 220, 230);
installing a first tooling support element with a shortest guide sleeve (270) into a cooling hole of the gas turbine engine (20);
passing a drilling tool (501) through a tooling pathway (261) of the first tooling support element;
operating the drilling tool (501) to drill a pilot hole into an internal component of the gas turbine engine (20);
installing a second tooling support element with a next shortest guide sleeve (270) into the cooling hole of the gas turbine engine (20) such that the next shortest guide sleeve (270) enters the pilot hole;
passing the drilling tool (501) through a tooling pathway (261) of the second tooling support element;
operating the drilling tool (501) to drill into the internal component at the pilot hole; and
repeating the installing, the passing and the operating to drill through the internal component.

12. The method according to claim 11, further comprising anchoring one or more of the tooling support elements (210, 220, 230) to a casing (250) of the gas turbine engine (20).

13. The method according to claim 11 or 12, wherein the internal component is angled relative to the tooling pathway (261).

14. The method according to any of claims 11 to 13, wherein the operating of the drilling tool (501) comprises vacuuming drilled material.

15. The method according to any of claims 11 to 14, wherein the operating of the drilling tool comprises cooling the drilling tool (501).
